# EUROPÄISCHE PATENTSCHRIFT

(11) **EP 0 469 384 B1**
(45) Veröffentlichungstag und Bekanntmachung des Hinweises auf die Patenterteilung: **15.03.1995**
(21) Anmeldenummer: 91111882.6
(22) Anmeldetag: 16.07.1991
(51) Int. Cl.: C08F 2/50, C08F 291/00, C08F 226/10

(54) **Strahlenhärtbare Reaktionsharzsysteme**
Radiation curable resin composition
Composition de résine thermodurcissable

(30) Priorität: 01.08.1990 DE 4024449
(43) Veröffentlichungstag der Anmeldung: 05.02.1992
(73) Patentinhaber: SIEMENS AKTIENGESELLSCHAFT, 80333 München (DE)
(72) Erfinder: Bayer, Heiner, Dr. rer. nat., W-8037 Olching (DE); Lehner, Barbara, W-8000 München 21 (DE); Rogalli, Michael, Dr. rer. nat., W-8000 München 83 (DE)

(56) Entgegenhaltungen:
- EP-A- 106 628
- EP-A- 0 059 988
- DE-A- 4 112 598
- GB-A- 2 029 428
- US-A- 4 113 592
- US-A- 4 207 156
- US-A- 4 400 519
- Database WPIL Week 3084, Derwent Publications Ltd., London, GB; AN-84-185252 & JP-A-59103793

## Beschreibung

Reaktionsharze sind flüssige und daher leicht verarbeitbare Kunststoffe, die sich durch eine Reihe von positiven Eigenschaften auszeichnen. Sie lassen sich unter verschiedenen einstellbaren Bedingungen zu Formstoffen härten, welche zum Beispiel eine hohe Wärmeformbeständigkeit, hohe Glasumwandlungstemperatur, hohe mechanische Festigkeit sowie eine gute Haftung auf unterschiedlichen anderen Materialien aufweisen. Da Reaktionsharze zumeist Mehrkomponentensysteme sind, lassen sich die Eigenschaften der Formstoffe zusätzlich durch Veränderung der Stöchiometrie der beteiligten Komponenten in einfacher Weise variieren.

Anwendungen für Reaktionsharze sind in vielen technischen Gebieten gegeben, beispielsweise bei elektrischen und elektronischen Geräten oder Bauteilen davon. Bauelemente mit hohen Betriebstemperaturen und/oder feinstrukturierte und daher empfindliche Bauteile werden bevorzugt mit Reaktionsharzen gehäust, umhüllt oder abgedeckt.

Bei einer Reihe von Eigenschaften allerdings, welche mit der hohen mechanischen Festigkeit einhergehen, sind aus Reaktionsharzen hergestellte Formkörper gegenüber solchen aus Thermoplasten benachteiligt. So weisen Reaktionsharze nur eine geringe Zähigkeit und Duktilität, eine niedrige Reißdehnung und bereits bei geringer Durchbiegung Bruch auf.

Teilweise gelingt es, diese Nachteile durch gefüllte Reaktionsharzsysteme auszugleichen, wobei die dem Harz fehlenden Eigenschaften über geeignete Füllstoffe in den späteren Formstoff eingebracht werden können. Auch Verbundwerkstoffe sind ein Mittel, verschiedenartige Eigenschaften von Werkstoffen miteinander zu kombinieren. Beispiele dafür sind fasergefüllte Reaktionsharze oder mit Harz getränkte Fasergewebe.

Mit gefüllten Reaktionsharzen oder mit Verbundwerkstoffen können zwar verschiedene Eigenschaftsprofile hergestellt werden, doch ist die Verarbeitung stark erschwert und die Formstoffe zeigen oft anisotrope Eigenschaften, insbesondere wenn Fasern verwendet werden. Für viele Anwendungen sind gefüllte Harze oder Verbundwerkstoffe daher nicht geeignet.

Aufgabe der vorliegenden Erfindung ist es daher, Reaktionsharze derart zu modifizieren, daß sie unter Beibehaltung ihrer bereits erwähnten positiven Reaktionsharzeigenschaften zusätzlich noch "thermoplastisches Verhalten" annehmen und insbesondere in Richtung Zähigkeit und Reißdehnung verbessert werden.

Diese Aufgabe wird erfindungsgemäß durch ein strahlenhärtbares Reaktionsharzsystem mit den Merkmalen von Anspruch 1 gelöst.

Weitere Ausgestaltungen der Erfindung sind den Unteransprüchen zu entnehmen.

Aus der EP 0 106 628 A1 ist eine strahlenhärtbare Druckertinte bekannt, bei der zum Beispiel ein thermoplastisches Polyolefin in einem als Verdünner dienenden vernetzbaren Olefin zusammen mit einem Photoinitiator gelöst ist.

Aus der JP 59 10 37 93 A ist eine UV-härtbare Anstrichfarbe bekannt, die zum Versiegeln oder als Grundierung für eine weitere Lackschicht verwendet werden kann. Sie besteht aus einem Thermoplasten, welcher zusammen mit einem Photoinitiator in einem ethylenisch ungesättigten Monomer gelöst ist.

Das erfindungsgemäße Reaktionsharzsystem ist für viele bekannte Reaktionsharzapplikationen geeignet. Je nach Auswahl der Edukte bzw. Einzelkomponenten der Lösung können nieder- bis hochviskose Reaktionsharzsysteme erhalten werden, deren Fließverhalten der gewünschten Applikation angepaßt ist. Das fertige Reaktionsharzsystem verhält sich mithin wie eine inzige Komponente, ist im Dunkeln nahezu beliebig lange lagerfähig und bei Bedarf ohne weitere Maßnahmen sofort einsetzbar.

Unter strahlenhärtend ist ein Härtungsmechanischmus zu verstehen, der durch Strahlung lediglich initiiert wird. Die chemischen Folgeraktionen, die auf die durch Strahlung initiierte Anfangsreaktion hin erfolgen, können auch im Dunkeln weiter ablaufen und führen zur vollständigen und schnellen Härtung des Reaktionsharzsystems zu einem Formstoff. Je nach Anteil des in der Lösung enthaltenen Thermoplasten zeigt dieser Formstoff ein mehr oder weniger ausgeprägtes thermoplastähnliches Verhalten, wobei die wesentlichen Eigenschaften eines Reaktionsharzformstoffes beibehalten werden. Es wird ein Eigenschaftsprofil erhalten, welches für Reaktionsharze bislang nicht oder nur als Verbundwerkstoff zugänglich war. Aufgrund der einfachen Verarbeitkarbeit des erfindungsgemäßen Reaktionsharzsystems eröffnen sich diesem somit bislang nicht realisierbare Anwendungen.

Dabei stellen die Eigenschaften des aus dem erfindungsgemäßen Reaktionsharzsystems zugänglichen Formstoffes nicht einfach einen Mittelwert aus den Eigenschaften des reinen Thermoplasten und des reinen Reaktionsharzes dar, vielmehr zeigt der Formstoff ein duales Verhalten, die Eigenschaften der reinen Komponenten liegen quasi nebeneinander vor. Dies kann durch geeignete Meßverfahren nachgewiesen werden. Beispielsweise werden in der dynamisch mechanischen Thermoanalyse (DMTA) zwei Dämpfungspeaks beobachtet, die auf das Vorliegen zweier unterschiedlicher Phasen im Formstoff schließen lassen. Teilweise kann auch durch Augenschein die Zweiphasigkeit erkannt werden, die sich in einer Trübung des Formstoffes erkennbar machen kann, wenn die Partikel der dispergierten Phase eine gewisse Größe von ca. 0,1 »m erreichen. Je nach Zusammensetzung des Reaktionsharzsystems können die zwei Phasen Reinphasen oder Mischphasen sein. Auf jeden Fall besteht die kontinuierliche Phase zum überwiegenden Teil aus Reaktionsharz, während sich der Thermoplast in der dispergierten Phase wiederfindet. Diese Zweiphasigkeit ermöglicht es erst, daß die Eigenschaften der "reinen" Komponenten erhalten bleiben und nebeneinander im Formstoff vorliegen.

Die Zweiphasigkeit ist weiterhin ein äußeres Zeichen der zumindest teilweisen Unverträglichkeit der Komponenten im Formstoff. Eine positive Wirkung entfaltet sie insbesondere dann, wenn der Partikeldurchmesser der dispergierten Phase mindestens 50 nm beträgt. Andererseits sollte der Partikeldurchmesser jedoch 50 »m nicht überschreiten, damit ein einigermaßen homogener Farbstoff vorliegt und die Wirkung der dispergierten Phase nicht wieder nachläßt. Vorzugsweise liegt die Größe der Partikel bei 0,1 bis 10 »m.

Die Partikelgröße der dispergierten Phase ist neben der erwähnten Verträglichkeit zwischen gehärtetem Reaktionsharz und Thermoplast zusätzlich noch durch die Wahl der Härtungsbedingungen einstellbar. Bei einer langsameren Härtung, die entweder bei tieferer Temperatur oder bei einer niedrigeren Leistung der Strahlungsquelle durchgeführt wird, erhält man einen größeren Partikeldurchmesser der dispersen Phase. Die umgekehrten Bedingungen, also erhöhte Temperatur und/oder höhere Strahlungsleistung bevorzugen eine Konservierung des homogenen Zustandes der Lösung, so daß sich im Formstoff weniger "reinphasige" Regionen ausbilden können. Diese Steuerung der "Dispersität", also die gezielte Erhöhung oder Erniedrigung der Phasengrenzfläche im Formstoff ist deshalb von besonderem Vorteil, da gewünschte Eigenschaften nur bei ganz bestimmter "Dispersität" erzielt und so optimiert werden können. Dies ist allein bei strahlenhärtbaren Systemen möglich, da nur dort die Härtung bei beliebigen Temperaturen mit unterschiedlicher Geschwindigkeit durchgeführt werden kann.

Die Netzwerkdichte des gehärteten Reaktionsharzsystems in der kontinuierlichen Phase entspricht im Prinzip dem einer reinen Reaktionsharzmasse. Um die dispergierten Thermoplastpartikel herum bilden sich im Netzwerk größere Maschen aus, die für einen festen Verbund des Formstoffes garantieren.

Eine weitere Verbesserung der mechanischen Eigenschaften wird erreicht, wenn der Thermoplast beim Härten des Reaktionsharzsystems auch chemisch indas Netzwerk eingebunden wird. Funktionelle Gruppen am Thermoplasten, die an der Härtungsreaktion des Reaktionsharzes teilnehmen können, führen zumindest an den Phasengrenzen zu einer chemischen Einbindung der dispergierten Partikel in der kontinuierlichen Reaktionsharzphase. Beispielsweise können OH-Gruppen an einem kationisch initiierten Härtungsprozeß partizipieren.

Die Auswahl der für das erfindungsgemäße Verfahren geeigneten Reaktionsharze umfaßt nahezu den gesamten Bereich der strahlenhärtbaren Harze, das heißt, alle Harze, die sich mit einem durch Strahlung ausgelösten Härtungsprozeß härten lassen. Da das Reaktionsharz gewissermaßen als Lösungsmittel für den festen Thermoplasten dient, ist nur die Viskosität ein begrenzender Faktor für die Verwendbarkeit des Reaktionsharzes in der Erfindung. Je mehr Thermoplast gelöst werden soll, umso dünnflüssiger muß das Reaktionsharz sein. Die Endviskosität des Reaktionsharzsystems ist von der gewünschten Verarbeitungsweise begrenzt. Da weder bei der Herstellung noch bei der Härtung des Reaktionsharzsystems erhöhte Temperaturen unbedingt erforderlich sind, können auch niedermolekulare flüchtige Bestandteile enthalten sein. Das Reaktionsharz ist auch nicht auf eine einheitliche Verbindung beschränkt, sondern kann auch eine Mischung mehrerer kompatibler Harze mit gleichem oder verschiedenen Härtungsmechanischmus darstellen.

Geeignete Reaktionsharze sind zum Beispiel Epoxidharze vom Glycidylethertyp. Als Basis für die Glycidylether können dienen: Bisphenole, zum Beispiel Bisphenol-A, Di- oder Polyhydroxyaromaten, zum Beispiel Resorcin; Polyarylakyle mit phenolischen OH-Gruppen; Novolake; Polyalkylenglykole oder auch Mehrfachalkohole, zum Beispiel Glycerin oder Pnetaerythritol. Weiterhin geeignet sind Verbindungen vom Glycydylether-Estertyp, zum Beispiel para-Hydroxybenzoesäure-Glycidyletherester; reine Glycidylester von Mehrfachcarbonsäuren mit aliphatischem oder aromatischem Kern, zum Beispiel Hexahydrophthalsäure oder Phthalsäure. Lineare aliphatische Epoxydharze, zum Beispiel epoxidiertes Polybutadien, epoxidiertes Sojabohnenöl oder auch cycloaliphatische Epoxidharze sind geeignet, sowie weitere kationisch härtende Harze wie Vinylether oder Vinylaromaten.

Auch radikalisch härtbare Harze mit Acrylat- oder Vinylgruppen, beispielsweise N-Vinylpyrrolidon oder Trimethylolpropantriacrylat können erfindungsgemäß eingesetzt werden.

Das Reaktionsharzsystem kann sowohl kationisch als auch radikalisch härtbare Bestandteile enthalten.

Die wichtigste Forderung an einen erfindungsgemäß verwendbaren Thermoplasten ist dessen Löslichkeit im gewünschten Reaktionsharz. Dazu muß eine chemische Verträglichkeit mit bzw. inertes
Verhalten gegenüber dem Reaktionsharz gegeben sein. Polare Gruppen sind nicht unbedingt erforderlich, verbessern aber die Löslichkeit eines Thermoplasten. Weiterhin ist das Molgewicht bzw. die Kettenlänge der thermoplastischen Polymere ein begrenzender Faktor für die Verträglichkeit. Sehr hochmolekulare Thermoplaste können daher ungeeignet sein. Die untere Grenze für die Kettenlänge der Thermoplastpolymeren wird nach den Eigenschaften des reinen Thermoplasten bestimmt. Ein niedermolekularer Thermoplast hat naturgemäß schlechtere mechanische Eigenschaften als ein entsprechend höhermolekularer und bringt daher auch im erfindungsgemäßen Reaktionsharzsystem weniger Vorteile, da die Eigenschaften des reinen Thermoplasten auch die Eigenschaften des aus dem Reaktionsharzsystem erhältlichen gehärteten Formstoffs bestimmen.

Gute physikalische Eigenschaften wie hohe Moduln, Zähigkeit, Reiß- und Zugfestigkeit sowie hohe Flexibilität zeigen Hochleistungsthermoplaste, auch Engineering-Thermoplaste genannt. Ausgenommen aus dieser Gruppe sind flüssigkristalline Polymere, deren Verwendung im Reaktionsharzsystem möglich aber wenig sinnvoll ist. Bevorzugt sind also Hochleistungsthermoplaste mit amorpher Struktur. Geeignete Vertreter sind beispielsweise Polyethersulfon, Polyetherimid, Polyethylenterephthalat, Polysulfon, Polyarylat, Polycarbonat, Polyamid/Polyimid, Polyimid oder Polyamid.

Weiterer Bestandteil eines erfindungsgemäßen Reaktionsharzsystems ist ein Photoinitiator oder ein Photoinitiatorsystem. Dies kann eine diskrete im Reaktionsharz lösliche Verbindung sein. Als Photoinitiatorsystem sind auch chemische Strukturen geeignet, die Bestandteil des Thermoplasten sind. In diesem Fall ist ein zusätzlicher Photoinitiator überflüssig.

Photoinitiatoren für den kationischen Härtungsmechanismus sind beispielsweise von stabilen organischen Kationen abgeleitet, insbesondere mit Schwefel oder Jod als Zentralatom. Als besonders vorteilhaft haben sich aromatische Oniumsalze mit komplexen Anionen erwiesen. Ein eine Lewis-Säure enthaltender Photoinitiator kann als Pi-Donor-Übergangsmetallkomplex realisiert werden. Weiterhin sind zu nennen Phenacylsulfoniumsalze, Hydroxylphenylsulfoniumsalze sowie Sulfoxoniumsalze. Auch organische Siliziumverbindungen, die bei UV-Bestrahlung ein Silanol freisetzen, initiieren bei Anwesenheit von Aluminiumalkoholaten eine kationische Härtung.

Für radikalische Polymerisation geeignete Photoinitiatoren können aromatische Ketone sein, beispielsweise Acetophenon- und Benzophenonderivate, oder andere Verbindungen, die H-Abstraktion aufweisen oder Alpha-Spalter sind.

Neben den bereits angeführten unerläßlichen Bestandteilen können im erfindungsgemäßen Reaktionsharzsystem noch weitere an sich bekannte Zusätze und Additive enthalten sein. Dadurch können dem Reaktionsharzsystem oder dem gehärteten Formstoff zusätzliche Eigenschaften verliehen werden, ohne daß die bereits erwähnten verbesserten mechanischen Eigenschaften darunter leiden. Zusätze zum Reaktionsharzsystem können sein Farbstoffe, Pigmente, Fließmodifikatoren, Stabilisatoren, Flammschutzmittel oder auch Füllstoffe. Dabei ist es fast immer möglich, durch Zusätze erzielbare Eigenschaften mit einem geeigneten Thermoplast einzuführen, beispielsweise eine selektive Absorption oder Transparenz durch einen Farbstoff.

Zur Herstellung des strahlenhärtbaren Reaktionsharzsystems werden die Bestandteile vermischt, gegebenenfalls unter erhöhter Temperatur. Schwerlösliche Thermoplaste werden bevorzugt als feines Pulver eingesetzt, um die Zeitdauer zum Erzeugen einer homogenen Lösung zu verkürzen. Hilfsweise ist es auch möglich, die Lösung in einem Lösungsmittel zu erzeugen und dieses anschließend wieder zu entfernen. Dieses Verfahren eignet sich jedoch nur bei Verwendung von schwer flüchtigen Reaktionsharzbestandteilen und ist bei Verwendung entsprechend niederviskoser Reaktionsharze überflüssig. Die Härtungsreaktion des Reaktionsharzsystems wird durch Bestrahlung ausgelöst, vorzugsweise durch UV-Bestrahlung. Wird ein Photoinitiator gewählt, der ausschließlich im Ultravioletten empfindlich ist, so ist eine Lagerung des fertig gemischten Reaktionsharzsystems auch unter längerwelligem Licht problemlos und für längere Zeit möglich. Eine Entmischung der Komponenten wird nicht beobachtet. Deshalb kann das Reaktionsharzsystem auch nach längerer Lagerung problemlos und ohne weitere Maßnahmen sofort appliziert oder anderweitig verarbeitet und gehärtet werden.

Im folgenden wird die Erfindung anhand von konkreten Zusammensetzungen (Formulierungen) von erfindungsgemäßen Reaktionsharzsystemen und den dazugehörigen Ausführungsbeispielen näher erläutert.

### Ausführungsbeispiele

Die Zusammensetzung von beispielhaft verwendeten kationisch härtenden Formulierungen ist aus Tabelle 1 ersichtlich. Die eingesetzten Bestandteile sind in Masseteilen angegeben. Die Mischungen von reaktiven Harzbestandteilen und Thermoplasten werden bei leicht erhöhten Temperaturen (60 - 90°C) homogenisiert, die Photoinitiatoren unter Ausschluß von kurzwelligem Licht bei Raumtemperatur eingerührt. Anschließend wird unter vermindertem Druck (< 1 mbar) entgast.

**Tabelle 1**

| Zusammensetzung beispielhafter kationisch härtbarer Formulierungen. | | | | | |
|---|---|---|---|---|---|
| Beispiel | RTX030 | RTX032 | RTX045 | 93/01 | 93/02 |
| Cycloaliphatisches Diepoxid (CY 179, Ciba Geigy) | - | - | 90 | 61 | 61 |
| Triethylenglykoldivinylether (GAF Europe) | - | - | - | 23 | 23 |
| Aromatisches Diepoxid (MY 790, Ciba Geigy) | 50 | - | - | - | - |
| Aromatisches Diepoxid (PY 306, Ciba Geigy) | - | 50 | - | - | - |
| Kresylglycidylether (DY 023, Ciba Geigy) | 50 | 50 | - | - | - |
| Polyethersulfon (Victrex PES 3600, ICI) | 17,6 | 17,6 | - | 16 | - |
| Polyethersulfon (Victrex PES 5200, ICI) | - | - | - | - | 16 |
| Polyarylat (Durel 400, Celanese) | - | - | 10 | - | - |
| Lösung von Arylsulfoniumhexafluoroantimonaten (UVI 6974, Union Carbide) | 1,2 | 1,2 | 1 | 1 | 1 |

Die Harzproben werden in Teflonformen mit rechteckigen Vertiefungen in 1 mm Dicke durch UV-Bestrahlung mit einer Quecksilbermitteldrucklampe ausgehärtet. Die Bestrahlungsintensität beträgt ca. 100 mW/cm², die Bestrahlungsdauer 1 bis 3 min.

Über einige relevante Eigenschaften der Harzmischungen und der gehärteten Harze unterrichtet Tabelle 2. Die Viskositäten wurden mit einem Platte/Kegelviskosimeter bei 25°C gemessen und sind in Pas angegeben. Aus der dynamisch-mechanischen Analyse (DMTA, Polymer Labs.) sind die Maxima der Verlustfaktoren angeführt.

**Tabelle 2**

| Eigenschaften von Harzen und Formkörpern. | | | | |
|---|---|---|---|---|
| | Aussehen der Mischung | Viskosität der Mischung | Aussehen des gehärteten Formstoffs | Tan Delta Maxima (DMTA) |
| RTX030 | fast farblos klar | 9,0 | undurchsichtig weißbraun | 70/210 |
| RTX032 | fast farblos klar | 15 | undurchsichtig weißbraun | 68/215 |
| RTX045 | fast farblos schwach trüb | 10,2 | undurchsichtig weiß | 162/215 |
| 93/01 | fast farblos klar | 9,6 | undurchsichtig weißbraun | 101/153 |
| 93/02 | fast farblos schwach trüb | 27 | undurchsichtig gelbbraun | 74/148 |

Als Vergleichsbeispiel wird eine Mischung gehärtet, die den Beispielen 93 entspricht, jedoch keinen Thermoplast enthält. Es zeigt sich nur ein Tan Delta Peak bei 135°C.

Der Zugversuch nach DIN 53455 ergibt am Beispiel RTX 030 eine Reißdehnung von 27 Prozent gegenüber 9,5 Prozent beim thermoplastfreien Vergleichsbeispiel RTX 030 (-). Damit wird beispielhaft gezeigt, welche deutlichen Verbesserungen mit den erfindungsgemäßen Reaktionsharzsystemen erzielt werden können und welche überlegenen mechanischen Eigenschaften die entsprechenden Formkörper gegenüber reinen Reaktionsharzen aufweisen.

## Patentansprüche

1. Strahlenhärtbares Reaktionsharzsystem, umfassend eine stabile homogene Lösung eines Thermoplasten in einem damit verträglichen Reaktionsharz, mit den Merkmalen
- das Reaktionsharz beinhaltet ein Epoxidharz
- der Anteil der Thermoplasten in der Lösung beträgt 3 bis 50 Gewichtsprozent
- das System ist durch Strahlung zu einem Formstoff mit einer kontinuierlichen und einer dispersen Phase härtbar, wobei die kontinuierliche Phase überwiegend aus Reaktionsharz besteht.

2. Reaktionsharzsystem nach Anspruch 1,
bei dem die disperse Phase des Formstoffes Partikel mit einem Durchmesser von 0,05 bis 50 »m aufweist.

3. Reaktionsharzsystem nach Anspruch 2,
bei dem die disperse Phase Partikel mit einem Durchmesser von 0,1 bis 10 »m aufweist.

4. Reaktionsharzsystem nach einem der Ansprüche 1 bis 3,
bei dem der Thermoplast ausgewählt ist aus der Gruppe der amorphen Hochleistungsthermoplaste (engineering-thermoplaste).

5. Reaktionsharzsystem nach einem der Ansprüche 1 bis 4,
bei dem der Thermoplast ausgewählt ist aus der Gruppe Polyethersulfon, Polyetherimid, Polyethylenterephthalat, Polysulfon, Polyarylat, Polycarbonat, Polyamid/Polyimid, Polyimid und Polyamid.

6. Reaktionsharzsystem nach mindestens einem der Ansprüche 1 bis 5,
in dem ein Photoinitiatorsystem enthalten ist.

7. Reaktionsharzsystem nach Anspruch 6,
bei dem das Photoinitiatorsystem Teil des Thermoplasten ist.

8. Reaktionsharzsystem nach mindestens einem der Ansprüche 1 bis 7,
bei dem die Strahlenhärtung durch UV-Strahlung initiiert wird.

9. Reaktionsharzsystem nach Anspruch 8,
welches kationisch härtbar ist.

10. Reaktionsharzsystem nach Anspruch 8,
welches sowohl kationisch als auch radikalisch härtbare Bestandteile enthält.

11. Reaktionsharzsystem nach einem der Ansprüche 1 bis 10,
bei dem in der homogenen Lösung unreaktive, mit der Strahlenhärtung kompatible Zusätze enthalten sind.

12. Reaktionsharzsysteme nach Anspruch 11,
bei dem diese Zusätze ausgewählt sind aus Füllstoffen, Pigmenten und Fließmodifikatoren.

## Claims

1. Radiation-curable reaction resin system comprising a stable homogeneous solution of a thermoplastic in a compatible reaction resin, having the features
- the reaction resin contains an epoxy resin
- the proportion of the thermoplastic in the solution is from 3 to 50% by weight
- the system is curable by radiation to give a moulded material having a continuous phase and a disperse phase, where the continuous phase comprises predominantly reaction resin.

2. Reaction resin system according to Claim 1, in which the disperse phase of the moulded material contains particles having a diameter of from 0.05 to 50 »m.

3. Reaction resin system according to Claim 2, in which the disperse phase contains particles having a diameter of from 0.1 to 10 »m.

4. Reaction resin system according to one of Claims 1 to 3, in which the thermoplastic is selected from the group consisting of amorphous engineering thermoplastics.

5. Reaction resin system according to one of Claims 1 to 4, in which the thermoplastic is selected from the group consisting of polyether sulphone, polyetherimide, polyethylene terephthalate, polysulphone, polyarylate, polycarbonate, polyamide/polyimide, polyimide and polyamide.

6. Reaction resin system according to one of Claims 1 to 5, which contains a photoinitiator system.

7. Reaction resin system according to Claim 6, in which the photoinitiator system is part of the thermoplastic.

8. Reaction resin system according to at least one of Claims 1 to 7, in which the radiation curing is initiated by UV radiation.

9. Reaction resin system according to Claim 8, which can be cured cationically.

10. Reaction resin system according to Claim 8, which contains both constituents which can be cured cationically and constituents which can be cured by means of free radicals.

11. Reaction resin system according to one of Claims 1 to 10, in which the homogeneous solution contains unreactive additives which are compatible with radiation curing.

12. Reaction resin systems according to Claim 11, in which these additives are selected from fillers, pigments and flow modifiers.

## Revendications

1. Système de résine réactionnelle pouvant durcir sous l'effet d'un rayonnement, comprenant une solution homogène stable d'une matière thermoplastique dans une résine réactionnelle compatible ayant les caractéristiques suivantes
- la résine réactionnelle contient une résine époxyde,
- la proportion de la matière thermoplastique dans la solution est de 3 à 50 % en poids,
- le système peut être durci par exposition à un rayonnement en une matière moulée ayant une phase continue et une phase dispersée, la phase continue étant constituée d'une manière prépondérante de résine réactionnelle.

2. Système de résine réactionnelle suivant la revendication 1,
dans laquelle la phase dispersée de la matière moulée comporte des particules d'un diamètre de 0,05 à 50 »m.

3. Système de résine réactionnelle suivant la revendication 2,
dans laquelle la phase dispersée comporte des particules d'un diamètre de 0,1 à 10 »m.

4. Système de résine réactionnelle suivant l'une des revendications 1 à 3,
dans lequel la matière thermoplastique est choisie dans le groupe des matières thermoplastiques à hautes performances (matières thermoplastiques techniques).

5. Système de résine réactionnelle suivant l'une des revendications 1 à 4,
dans lequel la matière thermoplastique est choisie dans le groupe d'une polyéthersulfone, d'un polyétherimide, d'un poly(téréphtalate d'éthylène), d'une polysulfone, d'un polyarylate, d'un polycarbonate, d'un polyamide/polyimide, d'un polyimide et d'un polyamide.

6. Système de résine réactionnelle suivant au moins l'une des revendications 1 à 5,
qui contient un système photoinitiateur.

7. Système de résine réactionnelle suivant la revendication 6,
dans lequel le système photoinitiateur fait partie de la matière thermoplastique.

8. Système de résine réactionnelle suivant l'une au moins des revendications 1 à 7,
dans lequel le durcissement par exposition à un rayonnement est initié par exposition à un rayonnement ultraviolet.

9. Système de résine réactionnelle suivant la revendication 8,
qui peut être durci par voie cationique.

10. Système de résine réactionnelle suivant la revendication 8,
qui contient des constituants durcissables aussi bien par voie cationique que par voie radicalaire.

11. Système de résine réactionnelle suivant l'une des revendications 1 à 10, dans lequel des additifs compatibles avec un durcissement par exposition à un rayonnement et non réactifs sont contenus dans la solution homogène.

12. Système de résine réactionnelle suivant la revendication 11,
dans lequel les additifs sont choisis parmi des charges, des pigments et des agents modifiant l'écoulement.
